# EUROPÄISCHE PATENTSCHRIFT

(11) **EP 1 929 852 B1**
(45) Veröffentlichungstag und Bekanntmachung des Hinweises auf die Patenterteilung: **19.01.2011**
(21) Anmeldenummer: 07023445.5
(22) Anmeldetag: 04.12.2007
(51) Int. Cl.: A01D 33/14

(54) **Vorrichtung zum Roden bzw. Ernten von Wurzelfrüchten**
Device for uprooting/harvesting root crops
Dispositif destiné à déraciner ou à récolter de plantes à racines

(30) Priorität: 06.12.2006 DE 102006057782
(43) Veröffentlichungstag der Anmeldung: 11.06.2008
(73) Patentinhaber: Holmer Maschinenbau GmbH, 84069 Eggmühl (DE)
(72) Erfinder: Richer, Eduard, 93095 Gailsbach (DE)
(74) Vertreter: Graf, Helmut

(56) Entgegenhaltungen:
- EP-A- 0 533 571
- DE-A1- 19 949 644
- DE-U1- 9 413 431
- GB-A- 2 120 419

## Beschreibung

Die Erfindung bezieht sich auf eine Vorrichtung (Rodeaggregat) zum mehrreihigen Roden oder Ernten von Wurzelfrüchten gemäß Oberbegriff Patentanspruch 1.

Bekannt ist ein Rodeaggregat (DE 199 49 644 A1), bei dem für ein gleichzeitiges Roden mehrerer Reihen (mehrreihiges Roden) an einem horizontalen und mit seiner Längsachse senkrecht zur Roderichtung orientierten Tragbalken mehrere Module mit an Rodewerkzeugträgern gehaltenen Rodewerkzeugen vorgesehenen sind. Die Rodetiefe der Module, die jeweils zum Roden einer Reihe dienen, ist durch Anheben bzw. Absenken der Rodewerkzeuge individuell regelbar, und zwar in Abhängigkeit von Sensorsignalen, die von mit Tastrollen zusammenwirkenden Sensoren geliefert werden. Für jedes Modul ist ein gesondertes, beim Roden gegen den Ackerboden anliegendes Tastrad erforderlich. Hierdurch ergibt sich zumindest eine relativ aufwendige Konstruktion.

Bekannt ist weiterhin (GB 2 120 419 A), die Arbeitstiefe von Bodenbearbeitungsgeräten in Form von Pflügen, die an einer Dreipunktaufhängung einer Zugmaschine befestigt und von dieser nachgezogen werden, unter Verwendung verschiedener elektrischer Sensoren durch entsprechendes Anheben bzw. Absenken der Dreipunktaufhängung zu steuern, und zwar in Abhängigkeit von der mit einem Tastrad mit zugehörigem Sensor erfassten Arbeitstiefe, in Abhängigkeit von dem mit einem Sensor erfassten Schlupf der angetriebenen Achse des Zugfahrzeugs und in Abhängigkeit von Sensorsignalen eines die Höhenlage der Dreipunktaufhängung erfassenden Sensors.

Aufgabe der Erfindung ist es, eine Vorrichtung zum mehrreihigen Roden oder Ernten von Wurzelfrüchten aufzuzeigen, die sich unter Beibehaltung der individuellen Einstellung oder Regelung der Rodetiefe der einzelnen Rodewerkzeuge oder Gruppen von Rodewerkzeugen durch eine einfache und betriebssichere Konstruktion auszeichnet. Zur Lösung dieser Aufgabe ist eine Vorrichtung zum mehrreihigen Roden oder Ernten von Wurzelfrüchten entsprechend dem Patentanspruch 1 ausgebildet.

Bei der Erfindung erfolgt die Steuerung oder Regelung der Rodetiefe nicht durch Abtasten des Niveaus des Ackerbodens mit Hilfe von Tasträdern, sondern unter Berücksichtigung der auf die Rodewerkzeuge und/oder Rodewerkzeugträger beim Roden einwirkenden mechanischen Belastung (Kraft und/oder Moment). Hierbei dient beispielsweise ein unmittelbar von dieser Belastung wenigstens eines Rodewerkzeugs und/oder Rodewerkzeugträgers jeder Rodewerkzeuggruppe abgeleitetes Sensorsignal oder aber ein mittelbar von dieser Belastung abgeleitetes Sensorsignal zur Steuerung oder Regelung der Rodetiefe. Erfindungsgemäß ist weiter vorgesehen, daß der wenigstens eine Sensor ein den Hydraulik-Druck am Stellglied erfassender Sensor ist.

In Weiterbildung der Erfindung besteht u.a. die Möglichkeit,
dass jeder Gruppe der Rodewerkzeuge wenigstens ein Sensor zur Bildung eines Sensorsignals zugeordnet ist, welches zur Steuerung des Stellgliedes dieser Gruppe eine Funktion der auf das wenigstens eine Rodewerkzeug der jeweiligen Gruppe beim Roden einwirkenden Belastung ist, wobei der wenigstens eine jeder Gruppe der Rodewerkzeuge zugeordnete Sensor vorzugsweise ein elektrischer Sensor ist,
und/oder
dass der wenigstens eine, jeder Gruppe zugeordnete Sensor ein Kraft- oder Drucksensor ist,
und/oder
dass der wenigstens eine, jeder Gruppe zugeordnete Sensor ein Momente messender Sensor ist,
und/oder
dass der wenigstens eine Sensor ein die Belastung des Rodewerkzeugträgers beim Roden erfassender Sensor ist,
und/oder
dass der wenigstens eine Sensor ein die Belastung des wenigstens einen Stellgliedes beim Roden erfassender Sensor ist,
und/oder
dass das wenigstens eine Rodewerkzeug jeder Gruppe an einem Rodewerkzeugträger vorgesehen ist, welcher über eine das wenigstens eine Stellglied aufweisende Hubeinrichtung am Rahmen beweglich vorgesehen ist, und/oder
dass die Hubeinrichtung von wenigstens zwei Hebeln gebildet ist, die jeweils an einem Ende an dem Rahmen und am anderen Ende an dem Rodewerkzeugträger zur Bildung eines Gelenkvierecks angelenkt sind,
und/oder
dass das wenigstens eine Stellglied zwischen dem Rahmen und einem Hebel der Hubvorrichtung oder zwischen dem Rahmen und dem Rodewerkzeugträger wirkt,
und/oder
dass der wenigstens eine Sensor ein die Belastung wenigstens eines Elementes der Hubeinrichtung beim Roden erfassender Sensor ist,
und/oder
dass Räder, beispielsweise Tasträder an dem Rahmen zur Einstellung der Höhenlage des Rahmens im Bezug auf das Niveau eines Ackerbodens vorgesehen sind,
und/oder
dass das Rodewerkzeug jeder Gruppe von wenigstens zwei Rodescharen gebildet ist,
und/oder
dass die Rodewerkzeuge oder Rodeschare jeder Gruppe durch ein Stellglied gemeinsam höhenverstellbar sind,
und/oder
dass die Hubvorrichtung jeder Gruppe von wenigstens zwei ein Gelenkviereck bildenden Hebeln und dem Stellglied gebildet ist,
und/oder
dass die Hubvorrichtung jeder Gruppe das wenigstens eine Stellglied sowie zumindest zwei parallele Hebelanordnungen aufweist, von denen jede ein Gelenkviereck mit wenigstens zwei Hebeln bildet,
und/oder
dass wenigstens zwei Hebel der beiden Hebelanordnungen durch eine Traverse miteinander verbunden sind,
und/oder
dass das wenigstens eine Stellglied ein hydraulisch betätigbares Stellglied ist,
und/oder
dass das wenigstens eine Stellglied ein pneumatisch oder elektrisch betätigbares Stellglied ist,
und/oder
dass eine Steuereinrichtung zur Steuerung der Stellglieder in Abhängigkeit von den Steuersignalen vorgesehen ist,
und/oder
dass das wenigstens eine Rodewerkzeug und/oder der wenigstens eine Rodewerkzeugträger und/oder die Hubeinrichtung und/oder das wenigstens eine Stellglied jeder Gruppe Bestandteil eines Moduls sind, welches zusammen mit gleichartigen Modulen an einem den Rahmen bildenden Träger vorgesehen ist,
wobei die vorgenannten Merkmale jeweils einzeln oder in beliebiger Kombination vorhanden sein können.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:
- Fig. 1: in sehr vereinfachter schematischer Darstellung ein Feld mit mehreren Zuckerrübenreihen, die sich jeweils senkrecht zur Zeichenebene der Figur erstrecken;
- Fig. 2: in perspektivischer Teildarstellung eine Vorrichtung bzw. ein Rodeaggregat für eine Erntemaschine zum mehrreihiges Roden bzw. Ernten von Wurzelfrüchten, insbesondere Zuckerrüben;
- Fig. 3: in vereinfachter Darstellung und in Seitenansicht eines der Module des Rodeaggregates der Figur 1.

Das in den Figuren allgemein mit 1 bezeichnete Rodeaggregat ist Bestandteil eines nicht dargestellten, dem Fachmann aber bekannten Erntefahrzeugs (Roders) zum gleichzeitigen mehrreihigen Roden oder Ernten von Wurzelfrüchten 2, insbesondere Zuckerrüben, aus mehreren Reihen, beispielsweise aus sechs Reihen R1 - R6 in einem Ackerboden 3.

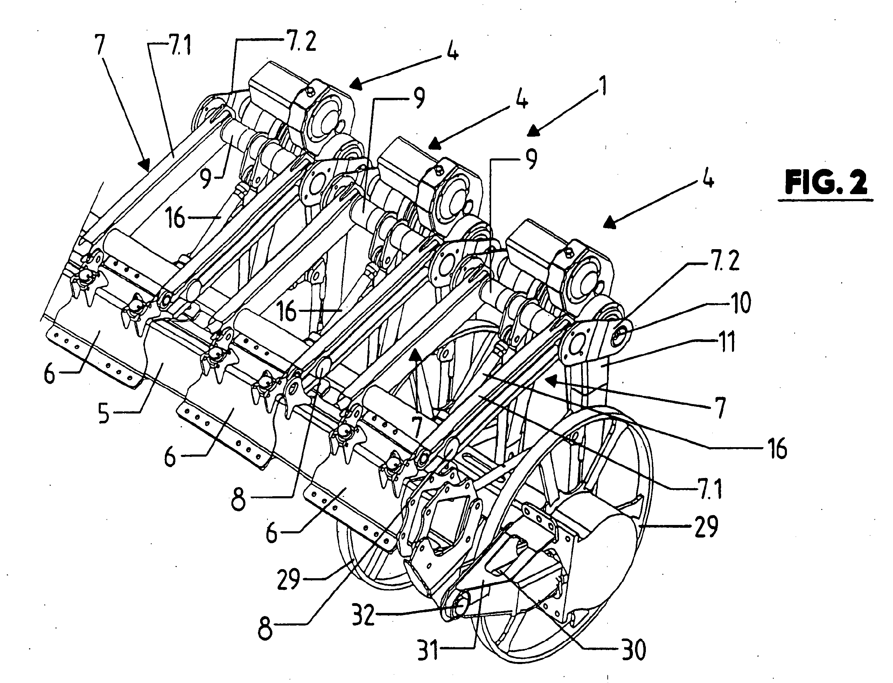

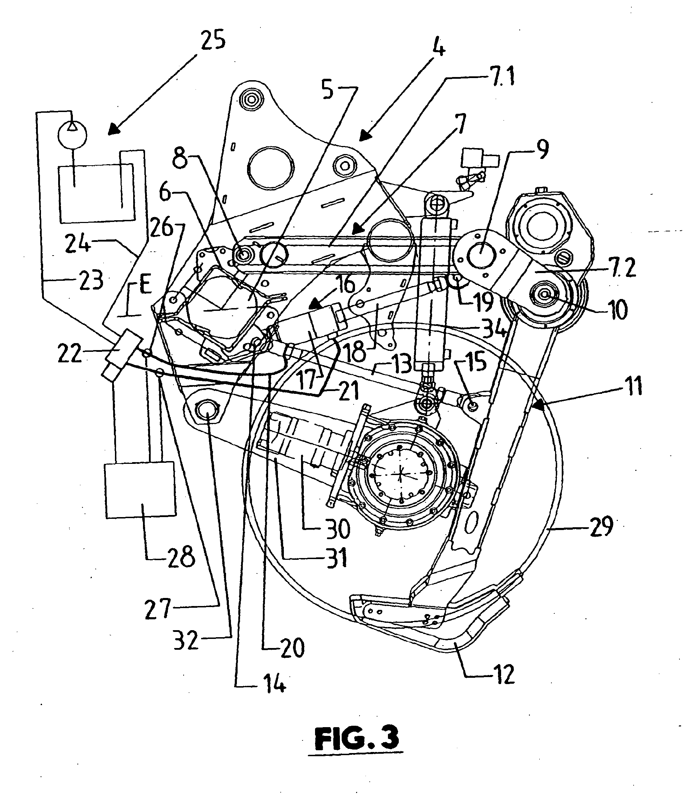

Das Rodeaggregat 1, welches beim Roden an der Frontseite des Erntefahrzeugs vorgesehen ist und mit diesem in Roderichtung (Pfeil A der Figuren 2 und 3) entlang der Reihen R bewegt wird, ist bei der dargestellten Ausführungsform modulartig aufgebaut, und zwar in der Form, dass für jede der zeitgleich gerodeten Reihen R jeweils ein Modul 4 mit den zugehörigen Rodewerkzeugen vorgesehen ist. Die einzelnen Module 4 sind an einem horizontalen, quer bzw. senkrecht zur - Roderichtung A orientierten Tragbalken 5 befestigt, der mit dem Erntefahrzeug verbunden ist, und zwar über eine Hubvorrichtung in der Weise, dass der Tragbalken 5 durch wenigstens ein Antriebselement, d.h. durch wenigstens einen Hydraulikzylinder gesteuert zumindest in vertikaler Richtung auf- und abbewegbar ist, wie dies in der Figur 3 mit dem Doppelpfeil B angedeutet ist.

Jedes Modul 4 besitzt ein Trag- oder Lagerelement 6, welches auf dem Tragbalken 5 diesen umgreifend befestigt ist, und zwar vorzugsweise derart, dass eine gewisse Einstellung jedes Moduls 4 in Längsrichtung des Tragbalkens 5 möglich ist.

Am Trag- oder Lagerelement 6 sind zwei zueinander parallel und voneinander beabstandete Hebel 7 jeweils mit einem Ende angelenkt, und zwar an einem Gelenk 8, welches an dem Trag- oder Lagerelement 6 oberhalb einer die Längsachse des Tragbalkens 5 einschließenden und bei Normallage des Rodeaggregats 1 horizontalen Ebene E vorgesehen sind. Die beiden Gelenke 8 sind achsgleich miteinander angeordnet und liegen mit ihren Gelenkachsen auch parallel zur Längsachse des Tragbalkens 5, gegenüber dieser aber radial versetzt. Die Hebel 7 sind jeweils als abgewinkelte Hebel ausgeführt, d.h. sie bestehen aus einem mit dem Gelenk 8 verbundenen Hebelabschnitt 7.1 und aus einem Hebelabschnitt 7.2, der mit dem Abschnitt 7.1 starr verbunden ist und dessen Längserstreckung mit der Längserstreckung des Hebelabschnittes 7.1 einen Winkel kleiner als 180°, aber deutlich größer als 90° einschließt, der sich zur Unterseite des Rodeaggregats 1 hin öffnet, beispielsweise einen Winkel von etwa 120°.

Am Übergang zwischen den Hebelabschnitten 7.1 und 7.2 sind die beiden Hebel 7 durch eine Traverse 9 miteinander verbunden. Weiterhin sind die beiden Hebel 7 auch an den freien Enden der Hebelabschnitte 7.2 über einen Gelenkbolzen 10 miteinander verbunden, auf dem zwischen den beiden Hebelabschnitten 7.2 voneinander beabstandet und dem jeweiligen Hebelabschnitt 7.2 benachbart jeweils ein Rodescharträger 11 an seinem oberen Ende schwenkbar gelagert ist. Die Traverse 9 und der Gelenkbolzen 10 sind mit ihren Achsen parallel zur Schwenkachse der Gelenke 8 und damit auch parallel zur Längsachse des Tragbalkens 5 orientiert.

Die Rodescharträger 11 erstrecken sich jeweils von ihrem oberen, am Gelenkbolzen 10 gelagerten Ende nach unten und sind an ihrem unteren Ende jeweils mit einem auswechselbaren Rodeschar 12 versehen, sodass jedes Modul 4 als Rodewerkzeug zwei Rodeschare 12 aufweist, die beim Roden zusammenwirkend die Wurzelfrüchte 2 unter Durchpflügen aus dem Ackerboden 3 herausheben.

Die zueinander im Wesentlichen parallelen Rodescharträger 12 sind weiterhin über jeweils einen Lenker 13 gelenkig mit dem Trag- oder Lagerelement 6 verbunden. Hierfür ist jeder unterhalb des Hebels 7 angeordnete Lenker mit einem Ende über ein Gelenk 14 am Trag- oder Lagerelement 6 und mit einem Gelenk 15 an den betreffenden Rodescharträger 11 angelenkt. Die beiden Gelenke 14 und ebenso auch die beiden Gelenke 15 sind mit ihren Gelenkachsen wiederum achsgleich angeordnet und zwar parallel zu der Gelenkachse der Gelenke 7 und damit auch parallel zur Achse des Gelenkbolzens 10 und der Längsachse des Tragbalkens 5. Das Gelenk 14 ist weiterhin am Trag- oder Lagerelement 6 so vorgesehen, dass es sich unterhalb der Ebene E findet.

Das Gelenk 15 ist an dem jeweiligen Rodescharträger 11 zwischen dem oberen und dem unteren Ende dieses Trägers vorgesehen, und zwar etwa in der Mitte. Die beiden Hebel 7 bilden mit ihrem zugehörigen Lenker 13 und den Gelenken 8, 10, 14 und 15 jeweils ein Gelenkviereck, welches ein Anheben und Absenken der Rodescharträger 11 ermöglicht, und zwar bei gleichzeitigem Schwenken jedes Rodescharträgers 12 um die Achse des Gelenks 10.

Zum gesteuerten Anheben und Absenken der Rodescharträger 11 weist jedes Modul 4 weiterhin ein eigenständiges Stellglied 16 auf, welches zwischen dem Trag- und Lagerelement und der Traverse 9 wirkt, und zwar derart, dass die Achse bzw. Wirklinie des Stellgliedes 16 in der senkrecht zu den Achsen der Gelenke 8, 10, 14 und 15 verlaufenden Mittelebene des jeweiligen Moduls 4 angeordnet ist.

Bei der dargestellten Ausführungsform ist das Stellglied 16 ein doppelt wirkender Hydraulikzylinder, dessen Zylindergehäuse 17 über ein z.B. achsgleich mit den Achsen der Gelenke 14 ausgebildetes Gelenk am Trag- oder Lagerelement 6 und dessen Kolbenstange 18 über ein Gelenk 19 an der Traverse 9 angelenkt ist, und zwar um eine Gelenkachse parallel zur Achse der Traverse 9. Die beiden Zylinderräume des Stellgliedes 16 bzw. des doppelt wirkenden Hydraulikzylinders sind über Steuerleitungen 20 und 21 an eine Steuerventileinrichtung 22 angeschlossen, die ihrerseits über Hydraulikleitungen 23 und 24 mit einem Hydraulikaggregat 25 verbunden ist oder aber Bestandteil eines solchen Aggregats ist.

Mit elektrischen Drucksensoren 26 und 27 wird der in den Zylinderräumen des Hydraulikzylinders 16 herrschende Druck erfasst und als elektrisches Messsignal einer elektronischen Steuereinrichtung 28 zugeführt, die ihrerseits u.a. die Steuerventilanordnung 22 ansteuert.

Während das von dem Hydraulikzylinder gebildete Stellglied 16 oder ein anderes Stellglied, die Drucksensoren 26 und 27 und die Steuerventilanordnung 22 für jedes Modul 4 gesondert vorgesehen sind, sind das Hydraulikaggregat 25 und die Steuereinrichtung 28 vorzugsweise für sämtliche Module 4 oder eine Gruppe von Modulen 4 gemeinsam vorgesehen.

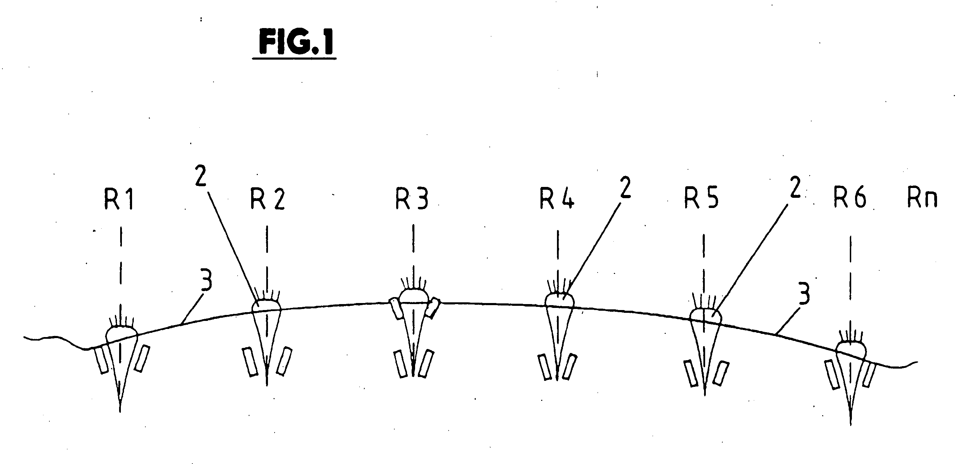

Wie in der Figur 1 angedeutet, befinden sich die bei einem mehrreihigen Roden gemeinsam zu rodenden Reihen R1 - R6 der Regel auf einem unterschiedlichen Niveau, sodass für ein optimales Roden, insbesondere auch für ein Roden mit einem möglichst geringen Kraft- und Leistungsaufwand eine Niveauregelung der Rodewerkzeuge bzw. der Rodeschare 12 für jede der zeitgleich gerodeten Reihen R1 - R6 bzw. für jedes Modul 4 erforderlich ist, und zwar z.B. in der Weise, dass trotz des unterschiedlichen Höhenniveaus der Reihen R1 - R6 die Rodetiefe bei allen Reihen R1 - R6 die selbe oder nahezu die selbe ist.

An den beiden Enden des Tragbalkens 5 sind jeweils zwei Tasträder 29 vorgesehen, die beim Roden durch jeweils einen Antrieb 30 um eine Achse parallel zur Längsachse des Tragbalkens 5 angetrieben werden und sich auf der Oberseite des Ackerbodens 3 beidseitig von der jeweils außen liegenden Reihe R1 bzw. R6 abstützen. Die Tasträder 29 sind jeweils an einem Ende eines Lenkers 31 gelagert, der mit seinem anderen Ende mittels eines Gelenks 32 an einem am Tragbalken 5 vorgesehenen Lager 33 angelenkt ist. Sämtliche Gelenke 32 sind mit ihren Achsen wiederum achsgleich zu einander und parallel zur Längsachse des Tragbalkens 5 vorgesehen. Mit Hilfe zusätzlicher Stellgliedern34, die bei der dargestellten Ausführungsform wiederum Hydraulikzylinder sind, sind die Tasträder 29 relativ zum Tragbalken 5 höhenverstellbar.

Für die Niveauregelung der Rodeschare 12 bzw. für die Regelung der Rodetiefe erfolgt zunächst über die Tasträder 29 eine Einstellung des Tragbalkens 5 auf ein Mittel- oder Ausgangsniveau. Im einfachsten Fall wird dies dadurch erreicht, dass die auf dem Ackerboden 3 laufenden Tasträder 29 den Tragbalken 5 auf den gewünschten Niveau abstützen, wobei dieses Niveau durch die Stellglieder 34 eingestellt werden kann. Grundsätzlich besteht aber auch die Möglichkeit, das Ausgangsniveau des Tragbalkens 5 gesteuert durch die Tasträder 29 mit einer das Rodeaggregat 1 mit dem Erntefahrzeug verbindenden Hubeinrichtung zu regeln, wobei die Tasträder 29 dann entlastet oder weitestgehend entlastet auf der Oberseite des Ackerbodens 3 beim Roden verlaufen. Hierbei besteht dann beispielsweise die Möglichkeit, den Druck in wenigstens einer Kammer des als Hydraulikzylinder ausgebildeten Stellgliedes 34 als Kriterium für die Einstellung oder Regelung des Ausgangsniveaus des Tragbalkens 5 zu verwenden.

Ausgehend von diesem Mittel- oder Ausgangsniveau des Tragbalkens 5 erfolgt dann für jedes Modul 4 individuell die Niveaueinstellung der Rodeschare 12 bzw. Regelung der Rodetiefe in Abhängigkeit vom Hydraulikdruck in Zylinderkammern des Stellgliedes 16, d.h. in Abhängigkeit von den Signalen der Sensoren 26 und 27. Hierbei wird davon ausgegangen, dass der Hydraulikdruck eine Funktion der Belastung der Rodeschare 12 bzw. der Rodescharträger 11 und damit der Rodetiefe ist, und zwar unter Berücksichtigung weiterer Parameter, wie z.B. aktuelle Eigenschaft und Beschaffenheit des Ackerbodens 3, Rodegeschwindigkeit usw. Unter Berücksichtigung dieser Parameter ergibt sich für die jeweils gewünschte Rodetiefe eine bestimmte auf den jeweiligen Rodescharträger 11 einwirkende Kraft und daraus resultierend ein bestimmter Hydraulikdruck als ein der jeweils erforderlichen Rodetiefe entsprechender Sollwert. Die Steuerventileinrichtung 22 kann somit von der Steuereinrichtung 28 in Abhängigkeit der Signale der Sensoren 26 und 27 derart gesteuert werden, dass immer dann, wenn der Hydraulikdruck den Sollwert unterschreitet, also eine zu geringe Rodetiefe vorliegt, der Hydraulikzylinder 16 im Sinne eines Absenkens der Rodeschare 12 des betreffenden Moduls 4 angesteuert wird bzw. umgekehrt immer dann, wenn der Hydraulikdruck den Sollwert bei zu großer Rodetiefe überschreitet, der Hydraulikzylinder 16 im Sinne eines Anhebens dieser Rodeschare 12 betätigt wird.

Ist nur eine Steuereinrichtung 28 für sämtliche Module 4 oder eine Gruppe von Modulen 4 gemeinsam vorgesehen, erfolgt die Steuerung dieser Module beispielsweise im Multiplexverfahren zeitlich nacheinander.

Die Erfindung wurde voranstehend an einem Ausführungsbeispiel beschrieben. Es versteht sich, dass zahlreiche Änderungen sowie Abwandlungen möglich sind, ohne das dadurch der der Erfindung zugrunde liegende Erfindungsgedanke verlassen wird. So ist es beispielsweise möglich, anstelle zweier Drucksensoren 26 und 27 nur einen Drucksensor je Modul 4 und/oder andere Sensoren vorzusehen, die zum Messen der beim Roden auf die Rodeschare 12 oder Rodescharträger 11 einwirkenden Belastungen (Kräfte und/oder Momente) geeignet sind, beispielsweise Kraftmessdosen, Dehnungsmessstreifen usw.

Weiterhin ist es selbstverständlich auch möglich, anstelle von Hydraulikzylinder als Stellglieder 16 andere Stellglied vorzusehen, beispielsweise pneumatisch betätigte Stellglieder, z.B. Pneumatikzylinder oder elektrisch betätigte Stellglieder, z.B. Elektro- oder Spindelmotoren usw.

Weiterhin wurde vorstehend davon ausgegangen, dass die Einstellung oder Regelung des Arbeitsniveaus bzw. der Rodetiefe der Rodeschare 12 der Module 4 unter Verwendung jeweils eines Regelkreises erfolgt, der zusätzlich zu den Sensoren 26 und 27 oder zusätzlich zu anderen Drücke, Kräfte oder Momente messenden Sensoren die elektronische Steuereinrichtung 28 und die von dieser Steuereinrichtung angesteuerte Steuerventilanordnung 22 aufweist. Im einfachsten Fall könnte eine Arbeitsniveaueinstellung auch durch einstellbare Überdruck-Ventile im HydraulikSystem, beispielsweise in einer Hydraulikverbindung zwischen den beiden Kammern des jeweiligen Hydraulikzylinders 16 realisiert sein.

### Bezugszeichenliste

- 1: Rodeaggregat
- 2: Wurzelfrüchte
- 3: Ackerboden
- 4: Modul des Rodeaggregats
- 5: Tragbalken
- 6: Trag- oder Lagerelement
- 7: Hebel
- 7.1, 7.2: Hebelabschnitt
- 8: Gelenk
- 9: Traverse
- 10: Gelenk
- 10.1: Gelenkbolzen
- 11: Rodescharträger
- 12: Rodeschare
- 13: Lenker
- 14, 15: Gelenk
- 16: Stellglied bzw. Hydraulikzylinder
- 17: Zylindergehäuse
- 18: Kolbenstange
- 19: Gelenk
- 20, 21: Steuer- oder Hydraulikleitung
- 22: Steuerventilanordnung
- 23, 24: Hydraulikleitung
- 25: Hydraulikaggregat
- 26, 27: Drucksensor
- 28: elektronische Steuereinrichtung
- 29: Tastrad
- 30: Antrieb für Tastrad 29
- 31: Lenker
- 32: Gelenk
- 33: Lager
- 34: Stellglied bzw. Hydraulikzylinder

- A: Bewegungsrichtung beim Roden
- E: Ebene
- R1...Rn: Reihe

## Patentansprüche

1. Vorrichtung zum mehrreihigen Roden bzw. Ernten von Wurzelfrüchten (2), insbesondere Zuckerrüben mit Rodewerkzeugen (12), die in wenigstens zwei Gruppen (4) an einem Rahmen (5) vorgesehen sind, wobei jede Gruppe wenigstens ein Rodewerkzeug (12) aufweist, welches zur Einstellung der Rodetiefe individuell durch ein Stellglied (16) höhenverstellbar ist, wobei jeder Gruppe (4) der Rodewerkzeuge (12) wenigstens ein Sensor (26, 27) zur Bildung eines Sensorsignals zur Steuerung oder Regelung der Rodetiefe über das Stellglied (16) zugeordnet ist, und wobei die Stellglieder hydraulisch betätigbare Stellglieder (16) sind,
**dadurch gekennzeichnet,**
**dass** jedes Stellglied (16) zur Steuerung oder Regelung der Rodetiefe in Abhängigkeit von der auf das jeweilige Rodewerkzeug (12) beim Roden einwirkenden und mit diesem erfassten mechanischen Belastung angesteuert wird, und dass hierfür der wenigstens eine Sensor (26, 27) jeder Gruppe (4) der Rodewerkzeuge (12) ein den Hydraulik-Druck am Stellglied (16) erfassender Sensor ist.

2. Vorrichtung nach Anspruch 1, **dadurch gekennzeichnet, dass** der wenigstens eine, jeder Gruppe (4) zugeordnete Sensor (26, 27) ein Drucksensor ist.

3. Vorrichtung nach Anspruch 1 oder 2, **dadurch gekennzeichnet, dass** das wenigstens eine Rodewerkzeug (12) jeder Gruppe (4) an einem Rodewerkzeugträger (11) vorgesehen ist, welcher über eine das wenigstens eine Stellglied (16) aufweisende Hubeinrichtung am Rahmen (5) beweglich vorgesehen ist.

4. Vorrichtung nach Anspruch 3, **dadurch gekennzeichnet, dass** die Hubeinrichtung von wenigstens zwei Hebeln (7, 13) gebildet ist, die jeweils an einem Ende an dem Rahmen (5, 6) und am anderen Ende an dem Rodewerkzeugträger (11) zur Bildung eines Gelenkvierecks angelenkt sind.

5. Vorrichtung nach Anspruch 3 oder 4, **dadurch gekennzeichnet, dass** das wenigstens eine Stellglied (16) zwischen dem Rahmen (5, 6) und einem Hebel (7) der Hubvorrichtung oder zwischen dem Rahmen (5, 6) und dem Rodewerkzeugträger (11) wirkt.

6. Vorrichtung nach einem der vorhergehenden Ansprüche, **gekennzeichnet durch** Räder, beispielsweise Tasträder (29) an dem Rahmen (5) zur Einstellung der Höhenlage des Rahmens (5) im Bezug auf das Niveau eines Ackerbodens (3).

7. Vorrichtung nach einem der vorhergehenden Ansprüche, **dadurch gekennzeichnet, dass** das Rodewerkzeug jeder Gruppe (4) von wenigstens zwei Rodescharen (12) gebildet ist,
und/oder
dass die Rodewerkzeuge oder Rodeschare (12) jeder Gruppe (4) durch ein Stellglied (16) gemeinsam höhenverstellbar sind.

8. Vorrichtung nach einem der vorhergehenden Ansprüche, **dadurch gekennzeichnet, dass** die Hubvorrichtung jeder Gruppe (4) von wenigstens zwei ein Gelenkviereck bildenden Hebel (7, 13) und dem Stellglied (16) gebildet ist,
und/oder
dass die Hubvorrichtung jeder Gruppe (4) das wenigstens eine Stellglied (16) sowie zumindest zwei parallele Hebelanordnungen aufweist, von denen jede ein Gelenkviereck mit wenigstens zwei Hebeln (7, 13) bildet,
wobei beispielsweise wenigstens zwei Hebel (7) der beiden Hebelanordnungen durch eine Traverse (9) miteinander verbunden sind.

9. Vorrichtung nach einem der vorhergehenden Ansprüche, **gekennzeichnet durch** eine Steuereinrichtung (28) zur Steuerung der Stellglieder (16) in Abhängigkeit von den Steuersignalen.

10. Vorrichtung nach einem der vorhergehenden Ansprüche, **dadurch gekennzeichnet, dass** das wenigstens eine Rodewerkzeug (12) und/oder der wenigstens eine Rodewerkzeugträger (11) und/oder die Hubeinrichtung (7, 13) und/oder das wenigstens eine Stellglied (16) jeder Gruppe Bestandteil eines Moduls (4) sind, welches zusammen mit gleichartigen Modulen (4) an einem den Rahmen bildenden Träger (5) vorgesehen ist.

## Claims

1. Device for the multi-row lifting and harvesting of root crops (2), more particularly sugar beet, with crop lifting tools (12) which are provided on a frame (5) in at least two groups (4) wherein each group has at least one crop lifting tool (12) which can be vertically adjusted individually by a position control member (16) for adjusting the lifting depth wherein each group (4) of lifting tools (12) is assigned at least one sensor (26, 27) for producing a sensor signal for controlling or regulating the lifting depth by way of the position control member (16) and wherein the position control members are hydraulically operable position control members (16), **characterised in that** each position control member (16) for controlling or regulating the lifting depth is controlled in dependence on the mechanical load which is acting on the relevant crop lifting tool (12) during lifting and which is detected by same, and that for this the at least one sensor (26, 27) of each group (4) of crop lifting tools (12) is a sensor which detects the hydraulic pressure on the position control member (16).

2. Device according to claim 1 **characterised in that** the at least one sensor (26, 27) assigned to each group (4) is a pressure sensor.

3. Device according to claim 1 or 2 **characterised in that** the at least one crop lifting tool (12) of each group (4) is provided on a lifting tool support (11) which is provided movable on the frame (5) by means of a lift mechanism which has at least one position control member (16).

4. Device according to claim 3 **characterised in that** the lift mechanism is formed by at least two levers (7, 13) which are each attached at one end to the frame (5, 6) and at the other end to the lifting tool support (11) in order to form an articulated four bar linkage.

5. Device according to claim 3 or 4 **characterised in that** the at least one position control member (16) acts between the frame (5, 6) and a lever (7) of the lift mechanism or between the frame (5, 6) and the crop lifting tool support (11).

6. Device according to one of the preceding claims **characterised by** wheels, by way of example sensor wheels (29), on the frame for adjusting the vertical position of the frame (5) in relation to the level of the farmland (3).

7. Device according to one of the preceding claims **characterised in that** the crop lifting tool of each group (4) is formed by at least two lifting shares (12), and/or that the lifting tools or lifting shares (12) of each group (4) are vertically adjustable in unison by one position control member (16).

8. Device according to one of the preceding claims **characterised in that** the lift mechanism of each group (4) is formed by at least two levers (7, 13) forming an articulated four bar linkage, and by the position control member, and/or that the lift mechanism of each group (4) comprises the at least one position control member (16) as well as at least two parallel lever assemblies of which each forms an articulated four bar linkage with at least two levers (7, 13), wherein by way of example at least two levers (7) of the two lever assemblies are connected to one another by a crossbar (9).

9. Device according to one of the preceding claims **characterised by** a control device (28) for controlling the position control members (16) in dependence on the control signals.

10. Device according to one of the preceding claims **characterised in that** the at least one crop lifting tool (12) and/or the at least one crop lifting tool support (11) and/or the lift mechanism (7, 13) and/or the at least one position control member (16) of each group are a constituent part of a module (4), which is provided together with similar modules (4) on a support (5) which forms the frame.

## Revendications

1. Dispositif pour un arrachage ou une récolte, sur plusieurs rangs, de tubercules (2), en particulier des betterave sucrières avec des outils d'arrachage (12) qui sont prévus sous la forme d'au moins deux groupes (4) présents au niveau d'un châssis (5), chaque groupe présentant au moins un outil d'arrachage (12), qui peut être réglé en hauteur de manière individuelle grâce à un actionneur (16) en vue du réglage de la profondeur d'arrachage, au moins un capteur (26, 27) étant associé à chaque groupe (4) des outils d'arrachage (12) afin de former un signal de capteur destiné à la commande ou au réglage de la profondeur d'arrachage par l'intermédiaire de l'actionneur (16), et les actionneurs étant des actionneurs (16) commandés hydrauliquement,
**caractérisé en ce que**,
chaque actionneur (16) destiné à la commande ou au réglage de la profondeur d'arrachage est commandé en fonction de la charge mécanique enregistrée par celui-ci et agissant sur l'outil d'arrachage respectif (12) lors de l'arrachage, et
le au moins un capteur (26, 27) de chaque groupe (4) des outils d'arrachage (12) est, à cet effet, un capteur enregistrant la pression hydraulique au niveau de l'actionneur (16).

2. Dispositif selon la revendication 1, **caractérisé en ce que** le au moins un capteur (26, 27) affecté à chaque groupe (4) est un capteur de pression.

3. Dispositif selon la revendication 1 ou 2, **caractérisé en ce que** le au moins un outil d'arrachage (12) de chaque groupe (4) est prévu au niveau d'un support d'outil d'arrachage (11), qui est prévu mobile au niveau du châssis (5) par l'intermédiaire d'un mécanisme de levage présentant le au moins un actionneur (16).

4. Dispositif selon la revendication 3, **caractérisé en ce que** le mécanisme de levage est formé d'au moins deux leviers (7, 13), qui sont articulés respectivement au niveau d'une extrémité sur le châssis (5, 6) et au niveau de l'autre extrémité sur le support d'outil d'arrachage (11) pour former un quadrilatère articulé.

5. Dispositif selon la revendication 3 ou 4, **caractérisé en ce que** le au moins un actionneur (16) agit entre le châssis (5, 6) et un levier (7) dudit mécanisme de levage ou entre le châssis (5, 6) et le support d'outil d'arrachage (11).

6. Dispositif selon l'une quelconque des revendications précédentes, **caractérisé par** des roues, par exemple des roues tâteuses (29), au niveau du châssis (5) en vue du réglage du positionnement en hauteur du châssis (5) par rapport au niveau d'un sol arable (3).

7. Dispositif selon l'une quelconque des revendications précédentes, **caractérisé en ce que** l'outil d'arrachage de chaque groupe (4) est formé d'au moins deux socs d'arrachage (12),
et/ou
les outils d'arrachage ou les socs d'arrachage (12) de chaque groupe (4) peuvent être réglés en hauteur collectivement grâce à un actionneur (16).

8. Dispositif selon l'une quelconque des revendications précédentes, **caractérisé en ce que** le mécanisme de levage de chaque groupe (4) est formé d'au moins deux leviers (7, 13) formant un quadrilatère articulé et de l'actionneur (16),
et/ou
le mécanisme de levage de chaque groupe (4) présente le au moins un actionneur (16) ainsi qu'au moins deux systèmes parallèles de leviers, dont chacun forme un quadrilatère articulé comprenant au moins deux leviers (7, 13),
au moins deux leviers (7) des deux systèmes de leviers étant par exemple reliés ensemble par un palonnier (9).

9. Dispositif selon l'une quelconque des revendications précédentes, **caractérisé par** un dispositif de commande (28) en vue de la commande de l'actionneur (16) en fonction des signaux de commande.

10. Dispositif selon l'une quelconque des revendications précédentes, **caractérisé en ce que** ledit au moins un outil d'arrachage (12) et/ou le au moins un support d'outil d'arrachage (11) et/ou le mécanisme de levage (7, 13) et/ou le au moins un actionneur (16) de chaque groupe fait partie d'un module (4), qui est prévu au niveau d'un support (5) formant le châssis en même temps que des modules (4) similaires.
